# EUROPEAN PATENT SPECIFICATION

(11) **EP 3 686 164 B1**
(45) Date of publication and mention of the grant of the patent: **20.03.2024**
(21) Application number: 19788940.5
(22) Date of filing: 04.02.2019
(51) Int. Cl.: C03B 11/08, G02B 3/00

(54) **MOLD FOR GLASS-MADE OPTICAL COMPONENT MOLDING USE, AND METHOD FOR MANUFACTURING GLASS-MADE OPTICAL COMPONENT USING SAID MOLD**
FORM ZUM FORMEN FÜR EINE AUS GLAS HERGESTELLTE OPTISCHE KOMPONENTE UND VERFAHREN ZUR HERSTELLUNG EINER AUS GLAS HERGESTELLTEN OPTISCHEN KOMPONENTE UNTER VERWENDUNG DIESER FORM
MOULE DE MOULAGE DE COMPOSANT OPTIQUE EN VERRE, ET PROCÉDÉ DE FABRICATION DE COMPOSANT OPTIQUE EN VERRE UTILISANT LEDIT MOULE

(30) Priority: 17.04.2018 JP 2018078780
(43) Date of publication of application: 29.07.2020
(73) Proprietor: Okamoto Glass Co., Ltd., Kashiwa-shi, Chiba 277-0872 (JP)
(72) Inventor: MARU, Tomohisa, Chiba 277-0872 (JP); KOTEGAWA, Shoji, Chiba 277-0872 (JP); TAKAHASHI, Satoshi, Chiba 277-0872 (JP)
(74) Representative: Schwerbrock, Florian
(86) International application number: PCT/JP2019/003785
(87) International publication number: WO 2019/202816

(56) References cited:
- WO-A1-2014/203636
- JP-A- S62 216 928
- JP-A- 2008 257 261
- JP-A- 2009 530 135
- JP-A- 2013 234 091

## Description

### [Technical Field]

The present invention relates to a mold for molding a glass-made optical component having a three-dimensional shape and a method for manufacturing the glass-made optical component using the mold. Specifically, the glass-made optical component is used for an optical component having a precise and complicated three-dimensional shape (e.g., glass-made double-sided aspherical lens, irregular shaped lens).

### [Background Art]

Since various light sources are replaced with LEDs and LDs in recent years, lens-shaped products and optical components become more precise and the shape of them becomes more complicated. Thus, the mold capable of molding the glass and the method for molding the glass by using the mold suitable for mass production or multi-kind and small-quantity production of the above described products are required.

Conventionally, as for the method of molding small glass molded articles such as optical components having a three-dimensional shape, a direct press method, a mold pressing method, a reheat press method and an injection molding method have been mainly tried.

The direct press method is the most typical press technology and achieved by introducing molten glass gob into a mold and press-molding it by a press machine. Since the glass gob is directly molded in the shape of the mold by a female mold, a male mold and a ring mold, this method is called as the direct press method. As for the mass production system, the glass is generally molded in the shape of the mold by introducing molten glass gob (a lump of molten glass) which is shear cut (cut by a blade) from the molten glass flowing out from a melting furnace into a female mold (concave shape mold located at the lower side of a pair of molds) so that the weight of the molten gob becomes approximately constant according to the product weight and then pressing it by a male mold (convex shape mold located at the upper side of a pair of molds).

A ring mold is arranged on an outer peripheral portion of the male mold. When the male mold is lowered to press the glass gob, the ring mold is lowered a little earlier than the male mold to be fitted to the female mold. Thus, the ring mold has a role of forming the edge of the pressed glass product while guiding the male mold.

The conventional direct press technology has the following disadvantages.
(1) When manufacturing a small precision glass component, it is difficult to control the weight of the molten glass gob constantly, and thus the weight of the glass gob varies widely. Accordingly, the problem is that the precise molding cannot be expected stably. Namely, it is necessary to absorb the variation of the weight of the glass gob by the variation of the thickness or the like of the product in this molding method. Thus, it is difficult to mold the product having high shape accuracy.
(2) In order to obtain a small and thin glass-made optical component, heat of the molten glass gob is rapidly taken by the mold when the molten glass gob is extended in the narrow space of the mold during a pressing process. Accordingly, the problem is that the glass is solidified before the molten glass gob is extended thinly and completely. In case that the size of the glass-made optical component is smaller, the heat amount held by the molten glass gob itself is small from the beginning. Thus, the molten glass gob is cooled quickly during the pressing process. Consequently, the glass may be cracked or broken during a press-molding process, and it is extremely difficult to mold the glass-made optical component having a complicated shape including thin or narrow portion.
(3) The molten glass gob having the temperature of approximately 1,000°C is molded by the mold having the temperature of approximately 500°C. Although the glass and the mold are prevented from adhering to each other, a kind of molding defect (defect of shape and size) called "sink marks" occurs due to the volume contraction since the molten glass gob is in contact with the mold and quickly cooled and solidified near the surface of the molten glass gob while inside the glass is shrunk and solidified later. Thus, high shape accuracy cannot be obtained.

As described above, although the direct press method is suitable for mass production, high shape accuracy cannot be obtained and the direct press method is not suitable for molding a small article and an article having a complicated shape.

Patent Literature 1 discloses a method for molding glass by sandwiching the molten glass flowing from a molten glass flowing orifice between a pair of female molds which are divided into two, and a mold for molding glass characterized in that a space is provided for releasing the glass pushed out from the female mold during a pressing process. However, because of the same reason as the ordinary direct press method, Patent Literature 1 is considered to be not suitable for molding a complicated three dimensional article having high shape accuracy.

Patent Literature 2 relates to the molding technology of an aspherical lens and discloses an molding method characterized in that molten glass is press-molded by a molding mold to form a cup-shaped molded article having a predetermined lens shape at the bottom surface, then a part of the predetermined lens shape located at the bottom surface of the cup-shaped molded article is pressed again, then distortion of the predetermined lens shape located at the bottom surface is removed by heat while keeping the cup-shaped molded article, and then the aspherical lens is cut from the part of the predetermined lens shape. Basically, in the method of Patent Literature 2, the shape is almost determined by the primary pressing. (In this case, the secondary pressing is done for finely adjusting the shape.)

On the other hand, high precision press technology called a mold pressing method is conventionally known. The mold pressing method is developed as the technology of manufacturing mainly a high-precision aspherical glass lens by a high-precision molding mold. This pressing technology is comprised of the following processes and characterized in that the high-precision shape of the mold and the surface precision can be transferred to the glass without generating "sink marks" on the glass.
(a) A preformed glass (glass molded article having the shape and volume close to those of the final product) is prepared.
(b) High-precision mirror finishing and surface processing are applied to a special material which is not adhered to the glass.
(c) The temperature of the preformed glass and the mold is increased around the softening point of the glass under a non-oxidizing atmosphere, the glass is pressed by the mold in a state that the glass and the mold have approximately same temperature, and then the temperature of the mold is lowered until the temperature becomes the glass transition point (temperature where the glass is structurally stable) or less while the pressing is maintained over a sufficient time period.

However, the above described mold pressing technology has the following disadvantages.
(1) Since the heating and pressing process is performed around the softening point, only the shape close to the shape of the preformed glass can be molded basically. Thus, there is a limit on the shape and size of the product.
(2) Since a long time is required for the heating and cooling under a non-oxidizing atmosphere, productivity is deteriorated. Thus, the mold pressing technology is not suitable for mass production.
(3) A special mold material is required. This is because the mold material and the glass are in contact with each other for a long time, and it is required to prevent them from adhering to each other. The non-oxidizing atmosphere is used for the same reason.

As described above, opposite to the direct press method, the mold pressing method is suitable for molding a small and high-precision articles such as an aspherical glass, but it is not suitable for molding articles having a complicated shape significantly different from the preformed glass.

Patent Literature 3 relates to the molding method for processing a glass material into a molded article such as a high-precision optical lens and discloses a method for obtaining an optical component such as a lens having extremely high dimensional precision within the tolerance of 3/100 mm, wherein the temperature of the molding mold is kept constant at the temperature equal to or above the transition point and equal to or below the softening point of the molded glass, a glass material having fluidity is introduced in the molding mold, the glass material is press-molded, and the pressed state is kept until the temperature distribution of the molded glass is unformalized (e.g., 20 seconds or more) to remove sink marks.

In addition, Patent Literature 4 discloses the method for precisely molding a glass optical component, wherein heated and softened glass material is introduced in a molding mold kept at a constant temperature around the glass transition point, the glass material is press-molded for a short time, and then the pressure of the mold is gradually reduced or the temperature of the mold is gradually reduced or both the pressure and temperature are gradually reduced.

However, the above described mold pressing method also has disadvantages that the fluidity of the glass is insufficient and it is difficult to mold an article having a complicated shape since the press temperature is around the glass softening point or less, and this method is basically not suitable for mass production since the pressing time is longer than the direct press method (Non-Patent Literature 1).

The reheat press method is the method of re-heating the glass article molded in a plate shape or a bar shape and press-molding it again. The reheat press method mainly aims for finely adjusting the shape of roughly molded article or improving the precision of it. Thus, the reheat press method is not suitable for precisely molding a complicated three dimensional article.

Patent Literature 5 discloses the method of producing a high-precision glass substrate for improving the molding precision of the glass substrate, the method is comprised of a direct press process of solidifying and molding molten glass into a predetermined shape and a reheat press process of pressing the obtained glass substrate again under a heating condition to finely adjust the shape or deform the shape.

In addition, Patent Literature 6 discloses the method of manufacturing a v-groove substrate using a reheat press molding, wherein molten glass is roughly press-molded to obtain a v-groove substrate and the obtained v-groove substrate is heated again until the v-groove substrate is softened to finely adjust the shape.

The above described technologies are also considered to be not suitable for molding a complicated three dimensional article having high shape accuracy.

The injection molding method is the molding method mainly used for molding resin. Thus, this method is basically not suitable for molding the glass since the glass has high melting temperature and viscosity of the glass changes suddenly according to the temperature. This is because the glass has high viscosity. Thus, high temperature is required to reduce the viscosity suitable for the injection molding and to obtain sufficient fluidity.

Patent Literature 7 discloses the technology of injecting the molten molding material into a molding mold from an injection nozzle disposed at the tip of a temperature-controlled heating cylinder by pressurizing and advancing a self-consumption type plunger. Patent Literature 7 has problems that a self-consumption type plunger made of glass should be manufactured by a separate process, the temperature of the self-consumption type plunger should be complicatedly controlled, and thus mass productivity is inferior. In addition, it is considered that Patent Literature 7 is not suitable for molding a complicated three dimensional article.

Patent Literature 8 discloses the technology of obtaining a glass molded article using low-melting-point glass having the melting point of 500°C or less by an injection molding device similar to the plastic. In Patent Literature 8, small pieces of molding material made of low-melting-point glass is supplied from a hopper of an injection molding machine without preliminarily melting the glass material, the glass material is directly heated in a cylinder barrel of the injection molding machine and melted by the rotation of a screw, the glass material is injected into a cavity of a mold from a nozzle provided at the tip of the cylinder barrel, and the glass material is cooled and solidified to form the molded article. However, Patent Literature 8 is only for the special low-melting-point glass and not suitable for molding general glass such as soda-lime glass and borosilicate glass having high melting point and high viscosity.

Patent Literature 9 discloses the technology where molten glass is supplied to a molding mold to perform the injection molding, and then transferred to a press stage whose temperature is adjusted to keep the viscosity around the yield point of the glass for further pressing the glass and correcting the shape in order to prevent the occurrence of sink marks in the molding mold caused by the thermal shrinkage accompanied with the temperature drop.

In the above described technology, it is difficult to mold the glass in a single process of the injection molding (so-called one shot molding) since the glass has high viscosity and the viscosity greatly changes by the change of the temperature. Thus, it is considered that Patent Literature 9 is not suitable for precisely molding a complicated three dimensional article.

Patent Literature 10 discloses the method of molding the glass where the mold pressing method and the injection molding method are combined. Patent Literature 10 is characterized in that the glass heated to 700 to 800°C and softened in a transfer chamber is extruded and filled through a runner into molds of the product disposed on a periphery of the transfer chamber. All molds are made of glassy carbon. Basically, the molding method of Patent Literature 10 is largely influenced by the mold pressing method. Thus, Patent Literature 10 has disadvantages that the fluidity of the glass is insufficient and it is difficult to mold an article having a complicated shape since the press temperature is around the glass softening point or less, is basically not suitable for mass production since the pressing time is long, and requires special mold material.

Patent Literature 11 discloses the molding method considered for solving the disadvantages of Patent Literature 10 and is a kind of the injection molding method. Basically, the molding method of Patent Literature 11 is achieved by replacing the transfer chamber disclosed in Patent Literature 10 with a glass fusing furnace. The process of heating the glass gob to around the softening point in the transfer chamber to soften the glass and extruding the softened glass by the mold pressing method is replaced with the process of directly flowing and filling the molten glass having low viscosity from the glass fusing furnace into the mold and then performing the press molding in the mold. Compared to the technology disclosed in Patent Literature 10, the temperature of the glass can be kept high throughout the whole process. Thus, it is considered that the fluidity of the glass is improved. However, the glass fusing furnace should be disposed on the upper part of the molding device and the mold. Thus, it is considered that there are problems in equipment, operation and work.

Patent Literature 12 is the technology related to the method of molding an optical element made of resin. Since the melting temperature of the resin is 200 to 300°C and sufficient fluidity can be obtained in the resin even at low temperature. However, it is difficult to directly apply the technology of Patent Literature 12 to the glass since the glass has high melting temperature, has viscosity (i.e., fluidity is bad), and the viscosity greatly changes by the change of the temperature.

WO2014203636 A1 teaches a mold for press-molding an optical component out of glass, the mold including a female mold, a male mold, and a ring mold around the male mold, configured such that a glass gob can be placed into the female mold, the male mold presses it from above such that the glass can flow upwards the female mold surface and into a gap between the female mold and the ring mold. WO2014203636 A1 discloses also the corresponding process of making a glass article using that mold.

### [Citation List]

### [Patent Literature]

[Patent Literature 1] Japanese Unexamined Patent Application Publication No. S62-216928
[Patent Literature 2] Japanese Unexamined Patent Application Publication No. H09-235126
[Patent Literature 3] Japanese Unexamined Patent Application Publication No. S47-27216
[Patent Literature 4] Japanese Unexamined Patent Application Publication No. S61-251529
[Patent Literature 5] Japanese Unexamined Patent Application Publication No. H11-189423
[Patent Literature 6] Japanese Unexamined Patent Application Publication No. 2000-275479
[Patent Literature 7] Japanese Unexamined Patent Application Publication No. H05-254858
[Patent Literature 8] Japanese Unexamined Patent Application Publication No. H06-279040
[Patent Literature 9] Japanese Unexamined Patent Application Publication No. H10-101347
[Patent Literature 10] Japanese Unexamined Patent Application Publication No. S49-81419
[Patent Literature 11] Japanese Unexamined Patent Application Publication No. H02-196038
[Patent Literature 12] Japanese Unexamined Patent Application Publication No. 2008-257261

### [Non-Patent Literature]

[Non-Patent Document 1] New Glass 72, Vol. 19, No.1, p.65 (2004)

### SUMMARY OF THE INVENTION

### [Problems to be Solved by the Invention]

In the conventional direct press method, it is difficult to control the weight of the molten glass gob constantly when manufacturing a small precision glass component, and thus the weight of the glass gob varies widely. Accordingly, the problem is that the precise molding cannot be expected stably.

Opposite to the direct press method, the conventional mold pressing method is suitable for molding a small and high-precision articles such as an aspherical glass, but it is not suitable for molding articles having a complicated shape significantly different from the preformed glass.

The reheat press method mainly aims for finely adjusting the shape of the glass article roughly molded in a plate shape or a bar shape or improving the precision of it. Thus, the reheat press method is not suitable for precisely molding a complicated three dimensional article.

The injection molding method is suitable and widely used for three-dimensionally molding a resin material. However, it is difficult to mold the glass in a single process of the injection molding since the glass has high viscosity and the viscosity greatly changes by the change of the temperature. Thus, the injection molding method is not suitable for precisely molding a complicated three dimensional article.

### [Means for Solving the Problem]

The purpose of the present invention is to provide a new mold capable of molding a glass-made optical component having a precise and complicated three-dimensional shape and a method for molding the glass using the mold suitable for mass production or multi-kind and small-quantity production.

In order to solve the above described conventional problems, the first invention of the present invention discloses a mold for molding a glass-made optical component having a precise and complicated three-dimensional shape, the mold having: a female mold which has a lower mold of at least one molding mold for molding the glass-made optical component on an outer peripheral portion of a concave surface of the female mold; a male mold which has a convex surface combined with the concave surface of the female mold; and a ring mold which is arranged on an outer peripheral portion of the male mold, the ring mold having an upper mold of the at least one molding mold for molding the glass-made optical component, wherein both the lower mold of the molding mold and the upper mold of the molding mold are female molds having concave shape, and wherein molten glass gob introduced into the concave surface of the female mold is configured to be pressed from above by the male mold having the convex surface so that the molten glass gob is injected into a space formed between the lower mold and the upper mold of the at least one molding mold.

Here, the glass-made optical component having a precise and complicated three-dimensional shape means a double-sided aspherical lens, an irregular shaped lens and other optical components having a complicated shape. The present invention can provide a mold capable of molding, for example, a glass-made optical component having grid-shaped grooves on both surfaces without having a flat surface almost at all although that is far more difficult than molding the simple-shaped concave lens and convex lens.

The mold of the present invention is comprised of four molds: a female mold; a male mold; a ring mold; and a molding mold. Although a main part of the female mold is the concave surface, a lower mold of the molding mold is provided on an outer peripheral portion of the female mold, and an upper mold of the molding mold is provided on a lower surface side of the ring mold. In the mold used for the conventional direct press method, a final molded product is press-molded between the female mold and the male mold or among the female mold, the male mold and the ring mold. On the other hand, in the present invention, the pressing between the female mold and the male mold is performed only for making the molten glass gob flow, and thus the molten glass gob is injected into a space formed by the molding mold provided on the peripheral portion of the female mold and the lower surface of the ring mold to obtain a final product in the molding mold. Thus, the present invention is completely different from the conventional direct press method.

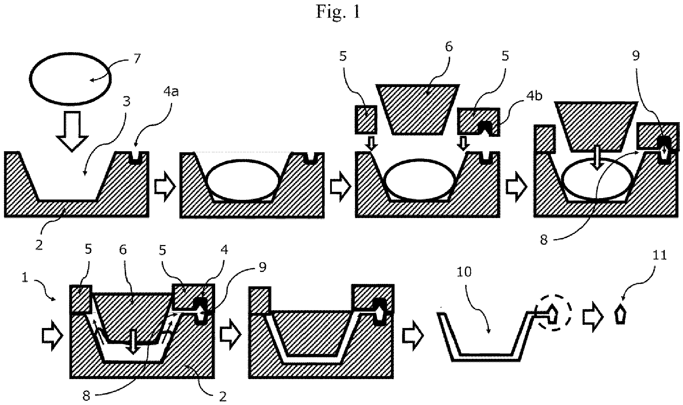

The configuration and function of the mold of the present invention will be explained using Fig. 1. A mold 1 of the present invention for molding a glass-made optical component is comprised of a female mold 2, a molding mold 4, a ring mold 5 and a male mold 6. A lump of molten glass (molten glass gob 7) which is a material of the glass-made optical component is introduced into a concave surface 3 of the female mold 2. On the other hand, the male mold 6 has a convex surface, and the male mold 6 is used for pressing the molten glass gob 7 from above. As described above, different from the conventional direct press method, the present invention is not the method of obtaining the molded article by directory transferring the shape of the mold formed by the female mold 2 and the male mold 6, but the present invention is the method where the molten glass gob 7 introduced into the female mold 2 is raised upward along the concave surface 3 of the female mold and reaches the outer peripheral portion when the molten glass gob 7 is pressed by the male mold 6, and the molten glass is injected and filled into the space of the molding mold 4 formed between a lower mold 4a of the molding mold 4 provided on the outer peripheral portion and an upper mold 4b of the molding mold provided on the lower surface of the ring mold 5 through an inlet 8 of the molten glass gob to form the glass-made optical component 11.

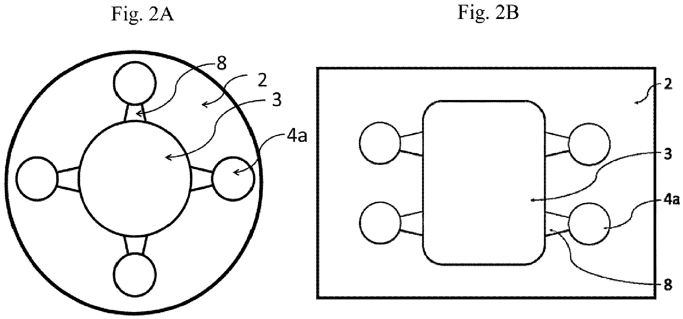

Here, as shown in Fig. 2A, it is preferred that a plurality of lower molds 4a of the molding mold 4 for molding the glass-made optical component 11 is concentrically provided on the outer peripheral portion of the concave surface of the female mold 2 centered around a center axis of the concave surface, a plurality of upper molds 4b of the molding mold 4 is concentrically provided on the ring mold 5 so as to be aligned with positions of the lower molds 4a which are concentrically provided, and a plurality of glass-made optical components 11 can be molded by one press operation. When the above described configuration is adopted, the productivity of the same optical components can be increased. In some cases, when the molding molds 4 having different shapes are provided, plurality kinds of optical components can be molded by one press operation.

However, the present invention is not necessarily limited to the configuration of concentrically arranging a plurality of molding molds. For example, it is also possible that a female mold having an approximately rectangular shape in plan view is used, a concave surface having an approximately rectangular shape in plan view is provided on the female mold, and a plurality of molding molds is arranged in parallel on the peripheral portion of the concave surface (Fig. 2B).

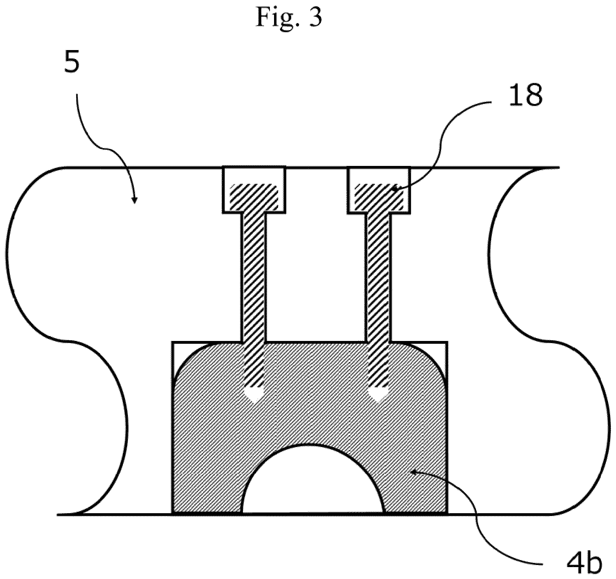

Furthermore, it is preferred that the lower mold 4a of the molding mold 4 for molding the glass-made optical component 11 can be integrated with the female mold 2 when the lower mold 4a is fitted in the female mold 2, the upper mold 4b of the molding mold 4 can be integrated with the ring mold 5 when the upper mold 4b is fitted in the ring mold 5, the lower mold 4a of the molding mold can be removed from the female mold 2, the upper mold 4b of the molding mold can be removed from the ring mold 5, and the lower mold 4a of the molding mold 4 and the upper mold 4b of the molding mold 4 can be replaced according to the shape of the glass-made optical component 11. This is because various kinds of optical components can be manufactured by using the same female mold 2, male mold 6 and ring mold 5. An example of a detachable mechanism of the molding mold is shown in Fig. 3. In this case, the molding mold is fixed to the ring mold by bolt-tightening.

The space 9 formed between the lower mold 4a and the upper mold 4b of the molding mold 4 for molding the glass-made optical component 11 during a pressing process is a space (main space) which has the shape corresponding to the shape of the glass-made optical component 11. In addition, it is preferred that an additional space 12 which is formed outside the space 9 is provided so that the molten glass gob can flow into the additional space 12 since the molten glass gob can be more surely injected into the space 9. When the above described configuration is adopted, shape defects of the glass-made optical component caused by the clearance formed in the space 9 can be prevented.

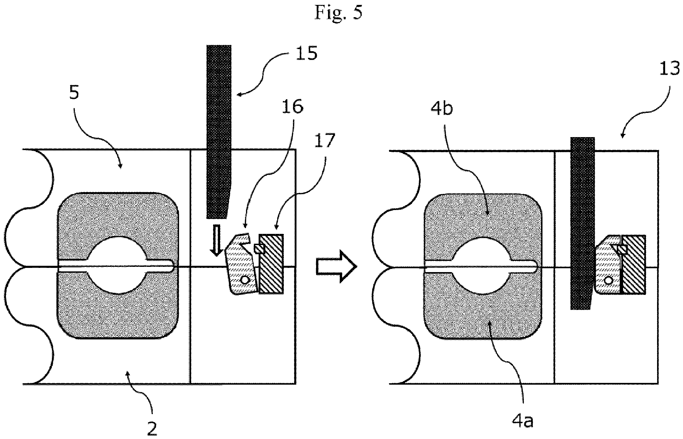

In addition, as shown in Fig. 5, it is preferred that a mold lock mechanism 13 is further provided to tighten the female mold 2 and the ring mold 5 with each other during a pressing process. When the above described configuration is adopted, dimensional defects of the glass-made optical component caused by the clearance formed between the female mold and the ring mold can be prevented. In Fig. 5, the mold lock mechanism is comprised of a lock bar 15 which is synchronously lowered with the male mold 6, a rotary hook 16 which is fixed to the female mold 2, and a lock plate 17 which is fixed to the ring mold 5. The rotary hook 16 and the lock plate 17 are locked with each other when the lock bar 15 is lowered synchronously with the male mold 6 and the tip of the lock bar pushes and rotates the rotary hook 16. Consequently, the female mold 2 and the ring mold 5 are also tightened and locked with each other.

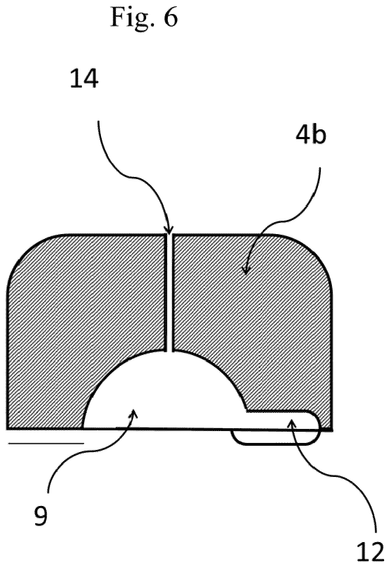

Furthermore, as shown in Fig. 6, it is preferred that a bored hole 14 is formed on at least one of the lower mold 4a and the upper mold 4b of the molding mold 4 for molding the glass-made optical component 11 so that air pressed by the molten glass gob is released from the main space which has the shape corresponding to the shape of the glass-made optical component 11 during the pressing process. Since the air existed in the space is released from the bored hole when the molten glass gob is injected into the space through the inlet 8 of the molten glass gob, it is expected that the dimensional precision of the optical component can be increased. In this case, it is preferred that an inner diameter of the bored hole is 0.1 mm or more and 0.5 mm or less. The above described inner diameter is large enough for releasing the air and small enough for preventing the molten glass from flowing in the bored hole.

In order to solve the above described conventional problems, the second invention of the present invention discloses a method of molding a glass-made optical component having a precise and complicated three-dimensional shape by using the mold for molding the glass-made optical component according to any one of claims 1 to 7, the method comprising:
(1) a process of introducing the molten glass gob into a central part of the concave surface of the female mold on which the lower mold of the molding mold for molding the glass-made optical component is provided at the outer peripheral portion;
(2) a process of lowering the ring mold to be closely in contact with the female mold so that the upper mold of the molding mold formed on a lower surface of the ring mold is closely in contact with the lower mold of the molding mold formed on the outer peripheral portion of the female mold to form a main space in the molding mold, the main space having the shape corresponding to the shape of the glass-made optical component;
(3) a process of pressing the molten glass gob introduced into the central part of the concave surface of the female mold from above by the male mold having the convex surface;
(4) a process of further pressing the molten glass gob by the male mold so that the molten glass gob flows upward along an inner surface of the concave surface of the female mold and the molten glass gob is injected into the space formed in the molding mold through an inlet of the molten glass gob;
(5) a process of pulling the male mold and then the ring mold upward after the temperature of the molten glass gob injected into the molding mold becomes equal to or lower than an annealing point of the molten glass and the molten glass is solidified; and
(6) a process of removing a solidified glass molded body formed in the space of the female mold, the male mold, the ring mold and the molding mold and then cutting the molded glass-made optical component formed in the molding mold.

As already described in detail, the above described processes (1) to (6) are sequentially performed in the present invention for molding a glass-made optical component having a precise and complicated three-dimensional shape by using the above described mold. It is required that the pressing process is continued until the temperature of the molten glass gob injected into the molding mold 4 becomes equal to or lower than the annealing point of the molten glass. The annealing point is defined as the temperature higher than the glass transition point by approximately 20°C and an internal strain of the glass is substantially removed for 15 minutes at the annealing point. Actually, the glass is almost solidified at the annealing point. In the manufacturing method of the present invention, if the pressing is not performed sufficiently until the glass in the molding mold is solidified, the dimension of the optical component cannot be stably specified. Whether or not the temperature of the glass becomes equal to or lower than the annealing point and the glass is solidified can be experientially understood from the time elapsed after pressing. In case strictness is required, it is preferred that a thermocouple is installed around the molding mold of the ring mold to measure the temperature. In addition, since the article primary obtained by the above described method is the glass molded body formed in the female mold, the male mold, the ring mold and the molding mold, the process of cutting the glass-made optical component from the molded body as the final product is required. If required, grinding process and polishing process of the cut surface and end surface are performed after the cutting process in some cases.

In the above described manufacturing method, it is preferred that the weight of the molten glass gob introduced in the concave surface 3 of the female mold is 6 to 70 times, more preferably 8 to 70 times, heavier than the weight of the glass molded body formed in the molding mold. When the weight ratio is specified as described above, the flow of the molten glass gob can be kept sufficiently and the molten glass gob can be surely injected into the space 9 (alternatively, the space of both the space 9 and the additional space 12 formed outside the space 9) for obtaining the glass-made optical component through the inlet 8 of the molten glass gob. If the weight is less than 6 times, the flow cannot be kept sufficiently, and thus the glass-made optical component cannot be molded. If the weight exceeds 70 times, the molten glass gob flows out from the space between the ring mold and the male mold, and thus the pressing pressure becomes insufficient.

### [Effects of the Invention]

By using the technology of the present invention, glass-made optical components having a precise and complicated three-dimensional shape can be molded by a new mold for molding a glass and a molding method of the glass using new mold although they cannot be obtained from the conventional mold and molding method. Furthermore, in the basic embodiments of the present invention, a special mold material and non-oxidizing atmosphere are not required unlike the mold pressing method, and the present invention enables mass production or multi-kind and small-quantity production. Thus, the present invention largely contributes to the development of industry.

### BRIEF DESCRIPTION OF THE DRAWINGS

Fig. 1 is a schematic diagram showing a mold for molding and a manufacturing method of a glass-made optical component of the present invention.
Fig. 2A shows an example of concentrically arranged molding molds. Fig. 2B shows an example of the molding molds arranged in parallel.
Fig. 3 shows an example of a detachable mechanism of the molding mold.
Fig. 4 shows an example of an additional space formed outside a space for the glass-made optical component of the molding mold.
Fig. 5 shows an example of a mold lock mechanism of a female mold a ring mold.
Fig. 6 shows an example of a bored hole formed in the molding mold.
Fig. 7 shows an example of a design drawing of the mold for molding of the present invention.
Fig. 8 shows an example of the glass-made optical component having a complicated shape formed by combining plural free-form surfaces and flat surfaces.
Fig. 9 shows an example of the glass-made optical component having a convex shape on both surfaces.

### [MODES FOR CARRYING OUT THE INVENTION]

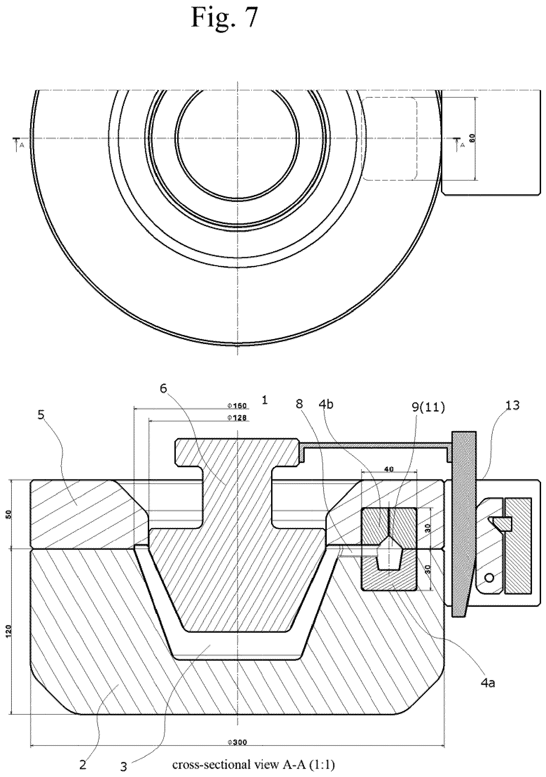

In the present invention, a mold 1 for molding a glass-made optical component 11 is produced by cutting and polishing a stainless steel according to a design drawing. A heat-resistant alloy having higher durability can be used for the molding mold 4 if required. As the design drawing (front view and plan view) of the mold concerning an embodiment of the present invention is shown in Fig. 7, the mold for molding the glass-made optical component of the present invention is comprised of a female mold 2, a molding mold 4, a ring mold 5 and a male mold 6. A concave surface 3 is formed on the female mold 2 to introduce a lump of molten glass (molten glass gob 7) made of a material of the glass-made optical component on the concave surface 3. Furthermore, a lower mold 4a of a molding mold 4 for molding a glass-made optical component 11 is formed on an outer peripheral portion of the female mold 2.

On the other hand, an upper mold 4b of the molding mold 4 is provided on a lower surface side of the ring mold 5 so that the upper mold 4b is located opposite to the lower mold 4a formed on the outer peripheral portion of the female mold 2. When the molten glass gob 7 is introduced into the concave surface 3 of the female mold 2, the ring mold 5 is first lowered and closely in contact with the female mold 2. Thus, a space sandwiched between the lower mold 4a of the molding mold 4 formed on the outer peripheral portion of the female mold 2 and the upper mold 4b of the molding mold formed on the lower surface portion of the ring mold 5 is formed. After the ring mold 5 is lowered, the male mold 6 having the convex surface is lowered. Thus, the molten glass gob 7 is pressed from above. The molten glass gob is raised upward along an inner surface of the concave surface 3 of the female mold 2 and reaches the outer peripheral portion while keeping sufficient fluidity, and the molten glass is injected into the space of the molding mold 4 sandwiched between the lower mold 4a and the upper mold 4b to form the glass-made optical component 11. At that time, the later described mold lock mechanism 13 is preferably used for certainly tightening the female mold 2 and the ring mold 5.

In the present invention, the mold 1 for molding the glass-made optical component 11 further has the features shown in Figs. 2 to 6. The features will be explained by using each drawing.

Fig. 2A shows an example of the female mold 2 where four lower molds 4a of the molding mold 4 for forming the glass-made optical component 11 are concentrically provided on the outer peripheral portion of the concave surface 3 of the female mold 2 around a center axis of the concave surface 3. Four upper molds 4b of the molding mold 4 are concentrically provided on the lower surface side of the ring mold 5 so as to be aligned with positions of the four lower molds 4a. Thus, this mold has a structure capable of simultaneously molding four glass-made optical components 11 by one press operation. Similarly, the number of the molding molds 4 can be increased to six or eight, for example. The present invention can contribute to increase the productivity of the same optical components. In some cases, when the molding molds 4 having different shapes are provided, plurality kinds of optical components can be molded by one press operation.

Fig. 3 shows the upper mold 4b of the molding mold 4 provided on the lower surface side of the ring mold 5. The upper mold 4b is fixed to the ring mold 5 by bolt-tightening or the like and the upper mold 4b has a structure detachable from the ring mold 5. Similarly, the lower mold 4a of the molding mold 4 also has a structure detachable from the female mold 2 by an arbitrary method such as bolt-tightening (not illustrated). Thus, it is possible to mold the optical components having various shapes by replacing the lower mold 4a of the molding mold 4 and the upper mold 4b of the molding mold 4 while the female mold 2, the male mold 6 and the ring mold 5 are not replaced. The above described features shows that the present invention is suitable for mass production or multi-kind and small-quantity production.

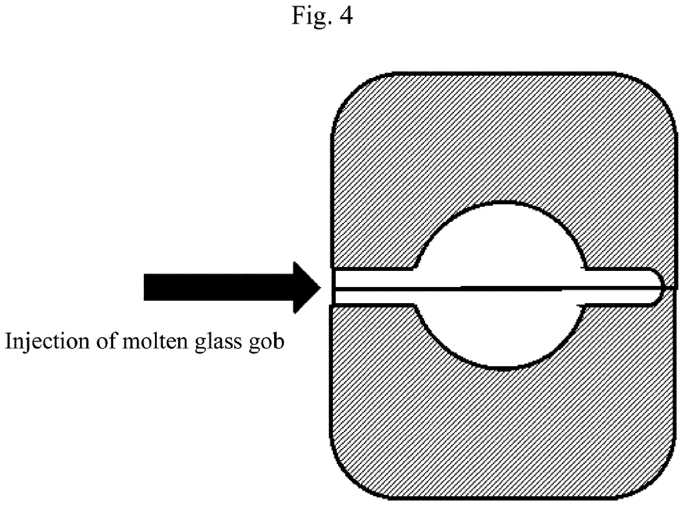

Fig. 4 shows the mold structure having a space (main space) 9 sandwiched by the lower mold 4a and the upper mold 4b of the molding mold 4 (i.e., space 9 having the shape corresponding to the shape of the glass-made optical component 11) and further having an additional space 12 formed outside the space 9. If the additional space 12 is not provided, the glass-made optical component 11 may become a defective depending on the shape of the optical component since the molten glass gob 7 may not flow to the corners of the space 9 having the shape corresponding to the shape of the glass-made optical component 11 while forming a clearance. When the additional space 12 is provided, the molten glass gob 7 can be surely injected and filled to at least the corners of the space 9 having the shape corresponding to the shape of the glass-made optical component 11.

Fig. 5 shows that the mold structure has the mold lock mechanism 13 for tightening the female mold 2 and the ring mold 5 with each other. When the molten glass gob is injected, the space between the female mold 2 and the ring mold 5 is expanded and the clearance is easily formed. However, when the mold lock mechanism 13 is provided, occurrence of the dimensional defects of the glass-made optical component 11 can be prevented by suppressing the clearance.

Fig. 6 shows an example of the mold where a bored hole 14 is formed on the upper mold 4b of the molding mold 4 for releasing the air pressed by the molten glass gob 7 from the space 9 which has the shape corresponding to the shape of the glass-made optical component 11 during the pressing process. When the mold has the structure of releasing the air existed in the space 9 from the bored hole 14, it is expected that the occurrence of the shape defects can be prevented and the dimensional precision of the optical component can be increased. In Fig. 6, the inner diameter of the bored hole 14 is specified to 0.3 mm.

Next, the manufacturing method of the glass-made optical component concerning the present invention is the manufacturing method of molding a glass-made optical component having a precise and complicated three-dimensional shape by using the above described mold for molding the glass-made optical component. The explanation will be made by using Fig. 1 (and Fig. 4). A glass-made optical component having precise and complicated three-dimensional shape can be manufactured by:
(1) introducing the molten glass gob 7 into a central part of the concave surface 3 of the female mold 2 on which the lower mold 4a of the molding mold 4 for molding the glass-made optical component 11 is provided at the outer peripheral portion;
(2) lowering the ring mold 5 to be closely in contact with the female mold 2 so that the upper mold 4b of the molding mold 4 formed on a lower surface of the ring mold is closely in contact with the lower mold 4a of the molding mold 4 formed on the outer peripheral portion of the female mold to form a space 9 in the molding mold, the space 9 having the shape corresponding to the shape of the glass-made optical component 11;
(3) pressing the molten glass gob 7 introduced into the central part of the concave surface 3 of the female mold 2 from above by the male mold 6 having the convex surface;
(4) further pressing the molten glass gob 7 by the male mold 6 so that the molten glass gob 7 flows upward along an inner surface of the concave surface 3 of the female mold 2 and the molten glass gob 7 is injected into the space 9 formed in the molding mold (alternatively, space of both the space 9 and the additional space 12 formed outside the space 9) through an inlet 8 of the molten glass gob;
(5) pulling the male mold 6 and then the ring mold 5 upward after the temperature of the molten glass gob injected into the molding mold 4 becomes equal to or lower than an annealing point of the molten glass and the molten glass is solidified; and
(6) removing a solidified glass molded body 10 formed in the space of the female mold 2, the male mold 6, the ring mold 5 and the molding mold 4 and then cutting the molded glass-made optical component 11 formed in the molding mold.

In the above described processes, it is important that the pressing process is continued until the temperature of the molten glass gob 7 injected into the molding mold 4 becomes equal to or lower than the annealing point of the molten glass. A molded article having high dimensional precision can be obtained by the pressing the glass for 10 to 30 seconds, for example, for continuously applying the pressure to the glass until the glass is solidified. Since the article primary obtained by the above described method is the glass molded body 10 formed in the female mold 2, the male mold 6, the ring mold 5 and the molding mold 4, the process of cutting the glass-made optical component 11 from the molded body 10 as the final product is required. If required, grinding process and polishing process of the cut surface and end surface are performed after the cutting process in some cases.

In the method of manufacturing the glass-made optical component of the present invention, the weight of the molten glass gob 7 introduced in the concave surface 3 of the female mold 2 is preferably 6 to 70 times, more preferably 8 to 70 times, heavier than the weight of the glass molded body formed in the molding mold 4. When the weight ratio is specified as described above, the flow of the molten glass gob 7 can be kept sufficiently and the molten glass gob 7 can be surely injected into the space 9 (alternatively, the space of both the space 9 and the additional space 12 formed outside the space 9) for obtaining the glass-made optical component 11 through the inlet 8 of the molten glass gob. If the weight is less than 6 times, the flow cannot be kept sufficiently, and thus the glass-made optical component cannot be molded. If the weight exceeds 70 times, the molten glass gob flows out from the space between the ring mold and the male mold, and thus the pressing pressure becomes insufficient.

In the mold for molding the glass-made optical component and the manufacturing method of the present invention, the pressing between the female mold 2 and the male mold 6 is performed for making the molten glass gob 7 flow, and thus the molten glass gob 7 is injected into the space 9 formed by the molding mold 4 provided on the peripheral portion of the female mold 2 and the lower surface of the ring mold 5 to obtain the final product 11. In this respect, the present invention is completely different from the mold and the manufacturing method of the conventional direct press method where the final product is simply and directly pressed by the female mold and the male mold. However, with respect to the point that the molten glass gob 7 is pressed by the female mold 2 and the male mold 6, the present invention takes over the advantage of the direct press method where the cycle time of the pressing process is short. Thus, it can be said that the present invention is the manufacturing method suitable for mass producing a glass-made optical component having precise and complicated three-dimensional shape.

### [Working examples]

A glass-made optical component having a precise three-dimensional shape was molded by using the above described mold and the above described molding method.
The working examples are shown in Table 1.
As for the glass, a general borosilicate glass having the thermal expansion coefficient of approximately 55 × 10⁻⁷/°C was used. The temperature of the molten glass gob was approximately 1,000°C when the molten glass gob was introduced into the female mold. Note that the annealing point of this glass is approximately 500°C.

**Table 1]**

| Working example | weight W1 of glass-made optical component (g) | weight W2 of molten glass gob (9) | W2/W1 | pressing pressure (Mpa) | pressin g time (sec) | moldability | outer appearance |
|---|---|---|---|---|---|---|---|
| Group 1 | complicated shape combining plural free-form surfaces and flat surfaces 15 g × 1 | 100 | 7 | 3.1 | 23 | Δ insufficient injection | Δ insufficient shape |
| | | 200 | 13 | | 23 | ○ good | ○ good |
| | | 300 | 20 | | 23 | ○ good | ○ good |
| | | 500 | 33 | | 25 | ○ good | ○ good |
| | | 700 | 47 | | 25 | ○ good | ○ good |
| | 15g | 900 | 60 | | 25 | ○ good | ○ good |
| | | 1100 | 73 | | 27 | × problem in releasability | × crack |

| Working example | weight W1 of glass-made optical component (g) | weight W2 of molten glass gob (9) | W2/W1 | pressing pressure (Mpa) | pressin g time (sec.) | moldability | outer appearance |
|---|---|---|---|---|---|---|---|
| Group 2 | complicated shape combining plural free-form surfaces and flat surfaces 15 g × 4 | 100 | 2 | 3.7 | 23 | × injection impossible | --- |
| | | 300 | 5 | | 23 | Δ insufficient injection | Δ insufficient shape |
| | | 500 | 8 | | 25 | ○ good | ○ good |
| | 60g | 700 | 12 | | 25 | ○ good | ○ good |
| | | 900 | 15 | | 25 | ○ good | ○ good |
| | | 1100 | 18 | | 27 | ○ good | ○ good |
| Group 3 | convex shape on both surfaces 15 g × 8 | 100 | 1 | 4.2 | 23 | × injection impossible | --- |
| | | 300 | 3 | | 23 | Δ insufficient injection | Δ insufficient shape |
| | 120g | 500 | 4 | | 23 | Δ insufficient injection | Δ insufficient shape |
| | | 700 | 6 | | 25 | ○ good | ○ good |
| | | 900 | 8 | | 25 | ○ good | ○ good |
| | | 1100 | 9 | | 27 | ○ good | ○ good |

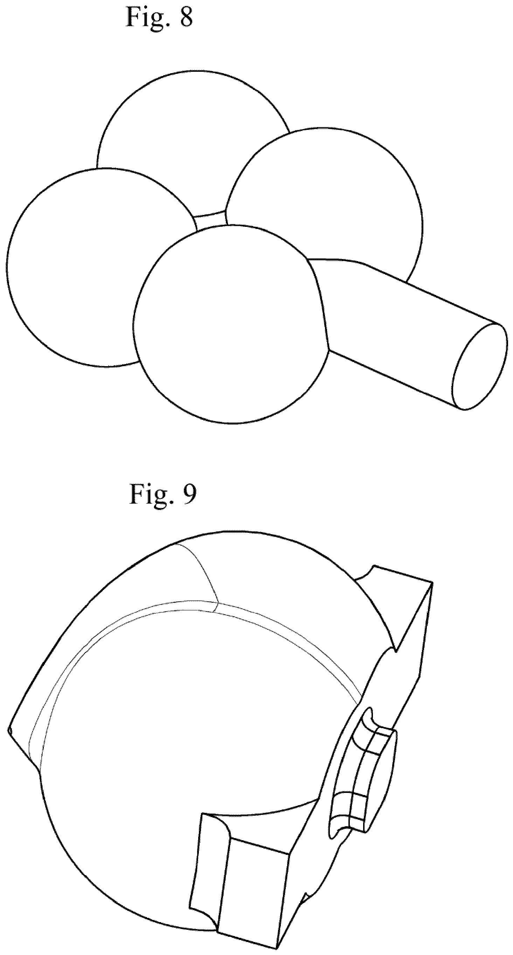

The group 1 shows the molded result using the design drawing shown in Fig. 7. In this example, only one molding mold was provided and a glass-made optical component having a complicated shape formed by combining plural free-form surfaces and flat surfaces as shown in Fig. 8 was molded. A weight W1 of the molded glass-made optical component was approximately 15 g. As already described, the glass-made optical component can be obtained by removing the glass molded in the female mold, the male mold, the ring mold and the molding mold from these molds, and cutting the portion of the glass-made optical component (i.e., final product) from the molded glass removed from the molds. In a series of tests of the group 1, the moldability and the outer appearance of the molded glass-made optical component were evaluated by changing a weight W2 of the molten glass gob introduced into the concave surface of the female mold. The pressing pressure applied from the male mold to the molten glass gob was approximately 3.1 MPa, and the pressing time was approximately 23 to 27 seconds in accordance with the weight of the molten glass gob.

When the weight of the molten glass gob was 100 g (W2/W1 was approximately 7), although the molten glass gob reached the inlet 8 of the molten glass gob, the molding mold was not sufficiently filled with the molten glass gob. Therefore, the glass-made optical component could not be obtained. This is because the weight and the heat capacity of the molten glass gob was small and thus the heat was suddenly taken during the pressing process. Thus, fluidity was lost and the molten glass was solidified. On the contrary, when the weight of the molten glass gob was increased to 1,100 g (W2/W1 was approximately 73), the volume of the molten glass gob was too large with respect to the volume of the space formed by the female mold 2, the ring mold 5, the male mold 6 and the molding mold 4 for molding the glass molded body 10 when the molten glass gob was introduced and pressed by the male mold. Thus, the molten glass gob 7 entered in the clearance between the ring mold 5 and the male mold 6 and the lowering of the male mold 6 was obstructed. Therefore, the pressing could not be continued. In this case, since the male mold 6 could not be lowered to the predetermined position, the balance of the thickness of the glass molded body 10 was lost, and the problem occurred when removed from the molding mold. Consequently, crack occurred on the glass molded body 10 including the glass-made optical component 11. In five examples where the weight of the molten glass gob was 200 g to 900 g, there was no problem in the moldability and the outer appearance of the obtained glass-made optical component was good. Here, the weight of the molten glass gob was controlled to a predetermined weight by a furnace for feeding the molten glass. The weight of the introduced molten glass gob was calculated by measuring the solidified glass molded body 10 by a balance after the pressing process. The same can be applied to the following working examples.

Similar to the group 1, the group 2 shows a result of molding glass-made optical components having a complicated shape formed by combining plural free-form surfaces and flat surfaces. In the group 2, four glass-made optical components were manufactured by one press operation by using the molding mold using the female mold as shown in Fig. 2A. In this case, the total weight of the four glass-made optical components was 4 × 15 g = 60 g. Table 1 shows the result where the test was performed in six standards of the weight of the molten glass gob from 100 g to 1,100 g. When the molten glass gob was 100 g (W2/W1 was approximately 2), the molten glass did not reach even to the inlet of the molten glass gob, and it was impossible to mold the glass-made optical component. This is also because the weight and the heat capacity of the molten glass gob was small and thus the heat was suddenly taken during the pressing process. Thus, fluidity was lost and the molten glass was solidified before the molten glass gob reaches the inlet. When the molten glass gob was 300 g (W2/W1 = 5), although the molten glass passed through the inlet of the molten glass gob and injected into the space for molding the glass-made optical component, the amount was insufficient and the glass-made optical component was incompletely molded. When the molten glass gob was 500 g or more (W2/W1 was approximately 8 or more), sufficient amount of the molten glass was raised upward along the concave surface of the female mold, reached the inlet of the molten glass gob, and injected into the space for molding the glass-made optical component to fill the space. Thus, the moldability was good. As a result, the outer appearance of the obtained glass-made optical component was the designed shape. In the group 2, even when the weight of the molten glass gob was 1,100 g, since 4 times as much as molten glass was injected into the molding mold through the inlet of the molten glass gob compared to the group 1, the pressing could be performed by the male mold without problems.

The group 3 shows an example of molding glass-made optical components (weight of one component is 15 g) having a convex shape on both surfaces as shown in Fig. 9. In the group 3, eight glass-made optical components were manufactured by one press operation by concentrically providing eight molding molds formed by the female mold and the ring mold. In this case, the total weight of the eight glass-made optical components was 8 × 15 g = 120 g. Table 1 shows the result where the test was performed in six standards of the weight of the molten glass gob from 100 g to 1,100 g. When the molten glass gob was 100 g (W2/W1 was approximately 1), the molten glass did not reach even to the inlet of the molten glass gob, and it was impossible to mold the glass-made optical component. When the molten glass gob was 300 g (W2/W1 was approximately 3) and 500 g (W2/W1 was approximately 4), although the molten glass passed through the inlet of the molten glass gob and injected into the space for molding the glass-made optical component, the amount was insufficient and the glass-made optical component was incompletely molded. When the molten glass gob was 700 g or more (W2/W1 was approximately 6 or more), sufficient amount of the molten glass was raised upward along the concave surface of the female mold, reached the inlet of the molten glass gob, and injected into the space for molding the glass-made optical component to fill the space. Thus, the moldability was good. As a result, the outer appearance of the obtained glass-made optical component was the designed shape. In the group 3, even when the weight of the molten glass gob was 1,100 g, since 8 times as much as molten glass was injected into the molding mold through the inlet of the molten glass gob compared to the group 1, the pressing can be performed by the male mold without problems.

In the above described tests, the molding mold having the space for forming the glass-made optical component and the additional space formed outside as shown in Fig. 4 was used. It was confirmed that higher shape accuracy of the glass-made optical component could be obtained by adopting such a configuration.

In addition, when a bored hole of approximately 0.3 mm is formed on the molding mold for releasing air as shown in Fig. 6, the shape accuracy could be further improved.

From the above described results, in the manufacturing method of the glass-made optical component of the present invention using the molding mold of the present invention, the following processes are considered to be performed that the molten glass gob is pressed by the male mold in a state that the molten glass gob have sufficient temperature and fluidity, the molten glass is raised upward along the concave surface of the female mold and reaches the inlet of the molten glass gob, the molten glass gob passes through the inlet of the molten glass gob and injected into the molding mold while keeping sufficient temperature and fluidity, and heat of the glass is taken in the molding mold and the glass is solidified, and thus the glass-made optical component having a target shape can be obtained. After the glass-made optical component is solidified in the molding mold, the pressed molten glass gob existed in the concave surface of the female mold is solidified. Thus, it is considered that the moldability, the shape accuracy of the glass-made optical component and releasability become the appropriate condition. In order to do that, as shown in Table 1, the weight of the introduced glass gob with respect to the product weight, the pressing pressure and the pressing time should be appropriately adjusted.

Although the present invention is explained in detail according to the embodiments and working examples, the present invention is not limited to the contents of the embodiments and working examples. The present invention can be carried out in other various styles.

### [Description of the Reference Numerals]

1: example of mold for molding glass-made optical component of present invention
2: female mold
3: concave surface of female mold
4: molding mold
4a: lower mold of molding mold
4b: upper mold of molding mold
5: ring mold
6: male mold
7: molten glass gob
8: inlet of molten glass gob
9: space formed in molding mold
10: glass molded body
11: glass-made optical component
12: additional space formed outside space 9
13: mold lock mechanism
14: bored hole
15: lock bar
16: rotary hook
17: lock plate
18: molding mold fixing bolt

## Claims

1. A mold for molding a glass-made optical component having a precise and complicated three-dimensional shape, the mold comprising:
a female mold which has a lower mold of at least one molding mold for molding the glass-made optical component on an outer peripheral portion of a concave surface of the female mold;
a male mold which has a convex surface combined with the concave surface of the female mold; and
a ring mold which is arranged on an outer peripheral portion of the male mold, the ring mold having an upper mold of the at least one molding mold for molding the glass-made optical component, wherein
both the lower mold of the molding mold and the upper mold of the molding mold are female molds having concave shape, and wherein
molten glass gob introduced into the concave surface of the female mold is configured to be pressed from above by the male mold having the convex surface so that the molten glass gob is injected into a space formed between the lower mold and the upper mold of the at least one molding mold.

2. The mold for molding the glass-made optical component according to claim 1, wherein
a plurality of lower molds of the molding mold for molding the glass-made optical component is concentrically provided on the outer peripheral portion of the concave surface of the female mold centered around a center axis of the concave surface,
a plurality of upper molds of the molding mold is concentrically provided on the ring mold so as to be aligned with positions of the lower molds which are concentrically provided, and
a plurality of glass-made optical components can be molded by one press operation.

3. The mold for molding the glass-made optical component according to claim 1 or 2, wherein
the lower mold of the molding mold for molding the glass-made optical component can be integrated with the female mold when the lower mold is fitted in the female mold,
the upper mold of the molding mold can be integrated with the ring mold when the upper mold is fitted in the ring mold,
the lower mold of the molding mold can be removed from the female mold,
the upper mold of the molding mold can be removed from the ring mold, and
the lower mold of the molding mold and the upper mold of the molding mold can be replaced according to the shape of the glass-made optical component.

4. The mold for molding the glass-made optical component according to any one of claims 1 to 3, wherein
the space formed between the lower mold and the upper mold of the molding mold for molding the glass-made optical component during a pressing process has a main space which has the shape corresponding to the shape of the glass-made optical component and an additional space which is formed outside the main space so that the molten glass gob can flow into the additional space.

5. The mold for molding the glass-made optical component according to any one of claims 1 to 4, wherein
the mold further comprises a mold lock mechanism which tightens the female mold and the ring mold with each other during a pressing process.

6. The mold for molding the glass-made optical component according to any one of claims 1 to 5, wherein
a bored hole is formed on at least one of the lower mold and the upper mold of the molding mold for molding the glass-made optical component so that air pressed by the molten glass gob is released from the main space which has the shape corresponding to the shape of the glass-made optical component during a pressing process.

7. The mold for molding the glass-made optical component according to claim 6, wherein
an inner diameter of the bored hole is 0.1 mm or more and 0.5 mm or less.

8. A method of molding a glass-made optical component having a precise and complicated three-dimensional shape by using the mold for molding the glass-made optical component according to any one of claims 1 to 7, the method comprising:
(1) a process of introducing the molten glass gob into a central part of the concave surface of the female mold on which the lower mold of the molding mold for molding the glass-made optical component is provided at the outer peripheral portion;
(2) a process of lowering the ring mold to be closely in contact with the female mold so that the upper mold of the molding mold formed on a lower surface of the ring mold is closely in contact with the lower mold of the molding mold formed on the outer peripheral portion of the female mold to form a main space in the molding mold, the main space having the shape corresponding to the shape of the glass-made optical component;
(3) a process of pressing the molten glass gob introduced into the central part of the concave surface of the female mold from above by the male mold having the convex surface;
(4) a process of further pressing the molten glass gob by the male mold so that the molten glass gob flows upward along an inner surface of the concave surface of the female mold and the molten glass gob is injected into the space formed in the molding mold through an inlet of the molten glass gob;
(5) a process of pulling the male mold and then the ring mold upward after the temperature of the molten glass gob injected into the molding mold becomes equal to or lower than an annealing point of the molten glass and the molten glass is solidified; and
(6) a process of removing a solidified glass molded body formed in the space of the female mold, the male mold, the ring mold and the molding mold and then cutting the molded glass-made optical component formed in the molding mold.

9. The method of molding a glass-made optical component having a precise and complicated three-dimensional shape according to claim 8, wherein
the weight of the molten glass gob introduced in the concave surface of the female mold is 6 to 70 times heavier than the weight of the glass-made optical component formed in the molding mold.

10. The method of molding a glass-made optical component having a precise and complicated three-dimensional shape according to claim 8, wherein
the weight of the molten glass gob introduced in the concave surface of the female mold is 8 to 70 times heavier than the weight of the glass-made optical component formed in the molding mold.

## Patentansprüche

1. Form zum Formen einer aus Glas hergestellten optischen Komponente mit einer präzisen und komplizierten dreidimensionalen Gestalt, die Form umfassend:
eine Matrize, die eine untere Form von mindestens einer Formungsform zum Formen der aus Glas hergestellten optischen Komponente auf einem äußeren Umfangsabschnitt einer konkaven Oberfläche der Matrize aufweist;
eine Patrize, die eine mit der konkaven Oberfläche der Matrize kombinierten konvexe Oberfläche aufweist; und
eine Ringform, die an einem äußeren Umfangsabschnitt der Patrize angeordnet ist, wobei die Ringform eine obere Form der mindestens einen Formungsform zum Formen der aus Glas hergestellten optischen Komponente aufweist, wobei
sowohl die untere Form der Formungsform als auch die obere Form der Formungsform Matrizen mit einer konkaven Gestalt sind, und wobei
ein in die konkave Oberfläche der Matrize eingeführter geschmolzener Glastropfen konfiguriert ist, um von oben durch die Patrize mit der konvexen Oberfläche gedrückt zu werden, so dass der geschmolzene Glastropfen in einen zwischen der unteren Form und der oberen Form der mindestens einen Formungsform eingespritzt wird.

2. Form zum Formen der aus Glas hergestellten optischen Komponente nach Anspruch 1, wobei
eine Vielzahl von unteren Formen der Formungsform zum Formen der aus Glas hergestellten optischen Komponente konzentrisch auf dem äußeren Umfangsabschnitt der konkaven Oberfläche der Matrize, zentriert um eine Mittelachse der konkaven Oberfläche, bereitgestellt ist,
eine Vielzahl von oberen Formen der Formungsform konzentrisch auf der Ringform vorgesehen ist, um mit den Positionen der unteren Formen, die konzentrisch bereitgestellt sind, ausgerichtet zu sein, und
eine Vielzahl von aus Glas hegestellten optischen Komponenten in einem Pressvorgang geformt werden kann.

3. Form zum Formen der aus Glas hergestellten optischen Komponente nach Anspruch 1 oder 2, wobei
die untere Form der Formungsform zum Formen der aus Glas hergestellten optischen Komponente in die Matrize integriert werden kann, wenn die untere Form in die Matrize eingepasst ist,
die obere Form der Formungsform in die Ringform integriert werden kann, wenn die obere Form in die Ringform eingepasst ist,
die untere Form der Formungsform von der Matrize entfernt werden kann, die obere Form der Formungsform von der Ringform entfernt werden kann, und
die untere Form der Formungsform und die obere Form der Formungsform entsprechend der Gestalt der aus Glas hergestellten optischen Komponente ausgetauscht werden kann.

4. Form zum Formen der aus Glas hergestellten optischen Komponente nach einem der Ansprüche 1 bis 3, wobei
der zwischen der unteren Form und der oberen Form der Formungsform zum Formen der aus Glas hergestellten optischen Komponente während eines Pressvorgangs gebildete Raum einen Hauptraum aufweist, der die Gestalt aufweist, die der Gestalt der aus Glas hergestellten optischen Komponente entspricht, und einen zusätzlichen Raum der außerhalb des Hauptraums gebildet ist, so dass der geschmolzene Glastropfen in den zusätzlichen Raum fließen kann.

5. Form zum Formen der aus Glas hergestellten optischen Komponente nach einem der Ansprüche 1 bis 4, wobei
die Form ferner einen Formverriegelungsmechanismus umfasst, der die Matrize und die Ringform während eines Pressvorgangs miteinander verspannt.

6. Form zum Formen der aus Glas hergestellten optischen Komponente nach einem der Ansprüche 1 bis 5, wobei
ein Bohrloch auf mindestens einer der unteren Form und der oberen Form der Formungsform zum Formen der aus Glas hergestellten optischen Komponente gebildet ist, so dass durch den geschmolzenen Glastropfen gedrückte Luft aus dem Hauptraum entweicht, der Gestalt aufweist, die der Gestalt der aus Glas hegestellten Komponente während eines Pressvorgangs entspricht.

7. Form zum Formen der aus Glas hergestellten optischen Komponente nach Anspruch 6, wobei
ein Innendurchmesser des Bohrlochs 0,1 mm oder mehr und 0,5 mm oder weniger beträgt.

8. Form zum Formen einer aus Glas hergestellten optischen Komponente mit einer präzisen und komplizierten dreidimensionalen Gestalt durch Verwenden der Form zum Formen der aus Glas hergestellten Komponente nach einem der Ansprüche 1 bis 7, das Verfahren umfassend:
(1) einen Vorgang zum Einführen des geschmolzenen Glastropfens in einen zentralen Teil der konkaven Oberfläche der Matrize, auf der die untere Form der Formungsform zum Formen der aus Glas hergestellten optischen Komponente am äußeren Umfangsabschnitt bereitgestellt ist;
(2) einen Vorgang zum Absenken der Ringform, um in engem Kontakt mit der Matrizenform zu sein, so dass die obere Form der Formungsform, die auf einer unteren Oberfläche der Ringform gebildet ist, in engem Kontakt mit der unteren Form der Formungsform ist, die auf dem äußeren Umfangsabschnitt der Matrizenform gebildet ist, um einen Hauptraum in der Formungsform zu bilden, wobei der Hauptraum die Gestalt aufweist, die der Gestalt der aus Glas hergestellten optischen Komponente entspricht;
(3) einen Vorgang zum Pressen des geschmolzenen Glastropfens, der in den zentralen Teil der konkaven Oberfläche der Matrize von oben durch die Patrize mit der konvexen Oberfläche eingeführt wird;
(4) einen Vorgang zum weiteren Pressen des geschmolzenen Glastropfens durch die Patrize, so dass der geschmolzene Glastropfen entlang einer inneren Oberfläche der konkaven Oberfläche der Matrize nach oben fließt und der geschmolzene Glastropfen durch einen Einlass des geschmolzenen Glastropfens in den in der Formungsform gebildeten Raum eingespritzt wird;
(5) einen Vorgang zum Ziehen der Patrize und dann der Ringform nach oben, nachdem die Temperatur des in die Formungsform eingespritzten geschmolzenen Glastropfens gleich oder geringer als ein Kühlpunkt des geschmolzenen Glases ist und das geschmolzene Glas erstarrt ist; und
(6) einen Vorgang zum Entfernen eines verfestigten Glasformkörpers, der in dem Raum der Matrize, der Patrize, der Ringform und der Formungsform gebildet wurde, und zum anschließenden Schneiden der in der Formungsform geformten aus Glas hergestellten optischen Komponente.

9. Verfahren zum Formen einer aus Glas hergestellten optischen Komponente mit einer präzisen und komplizierten dreidimensionalen Gestalt nach Anspruch 8, wobei
das Gewicht des geschmolzenen Glastropfens, der in die konkave Oberfläche der Matrize eingeführt wird, 6- bis 70-mal schwerer als das Gewicht der in der Formungsform geformten aus Glas hergestellten optischen Komponente ist.

10. Verfahren zum Formen einer aus Glas hergestellten optischen Komponente mit einer präzisen und komplizierten dreidimensionalen Gestalt nach Anspruch 8, wobei
das Gewicht des geschmolzenen Glastropfens, der in die konkave Oberfläche der Matrize eingeführt wird, 8- bis 70-mal schwerer als das Gewicht der in der Formungsform geformten aus Glas hergestellten optischen Komponente ist.

## Revendications

1. Un moule pour mouler un composant optique en verre ayant une forme tridimensionnelle précise et compliquée, le moule comprenant :
Un moule femelle qui comporte un moule inférieur d'au moins un moule de moulage pour mouler le composant optique en verre sur une partie périphérique extérieure d'une surface concave du moule femelle ;
Un moule mâle qui présente une surface convexe combinée à la surface concave du moule femelle, et
Un moule en anneau qui est placé sur une partie périphérique extérieure du moule mâle, le moule en anneau comportant un moule supérieur du au moins un moule de moulage pour mouler le composant optique en verre, où
A la fois le moule inférieur du moule de moulage et le moule supérieur du moule de moulage sont des moules femelles ayant une forme concave, et où
La paraison de verre fondu introduite dans la surface concave du moule femelle est configurée pour être pressée par le haut par le moule mâle ayant la surface convexe, de sorte que la paraison de verre fondu soit injectée dans un espace formé entre le moule inférieur et le moule supérieur du au moins un moule de moulage.

2. Le moule pour mouler le composant optique en verre selon la revendication 1, où
Une pluralité de moules inférieurs du moule de moulage pour mouler le composant optique en verre est concentriquement prévue sur la partie périphérique extérieure de la surface concave du moule femelle centré autour d'un axe central de la surface concave,
Une pluralité de moules supérieurs du moule de moulage est concentriquement prévue sur le moule en anneau de façon à être alignée sur les positions des moules inférieurs qui sont concentriquement prévus, et
Une pluralité de composants optiques en verre peut être moulée par une opération de pressage.

3. Le moule pour mouler le composant optique en verre selon la revendication 1 ou 2, où
Le moule inférieur du moule de moulage pour mouler le composant optique en verre peut être intégré au moule femelle lorsque le moule inférieur est monté dans le moule femelle,
Le moule supérieur du moule de moulage peut être intégré au moule en anneau lorsque le moule supérieur est monté dans le moule en anneau,
Le moule inférieur du moule de moulage peut être retiré du moule femelle,
Le moule supérieur du moule de moulage peut être retiré du moule en anneau, et
Le moule inférieur du moule de moulage et le moule supérieur du moule de moulage peuvent être remplacés en fonction de la forme du composant optique en verre.

4. Le moule pour mouler le composant optique en verre selon l'une quelconque des revendications 1 à 3, où
L'espace formé entre le moule inférieur et le moule supérieur du moule de moulage pour mouler le composant optique en verre pendant un processus de pressage comporte un espace principal qui a la forme correspondant à la forme du composant optique en verre et un espace complémentaire qui est formé à l'extérieur de l'espace principal, de sorte que la paraison de verre fondu puisse s'écouler dans l'espace complémentaire.

5. Le moule pour mouler le composant optique en verre selon l'une quelconque des revendications 1 à 4, où
Le moule comporte également un mécanisme de verrouillage du moule qui serre le moule femelle et le moule en anneau l'un sur l'autre pendant un processus de pressage.

6. Le moule pour mouler le composant optique en verre selon l'une quelconque des revendications 1 à 5, où
Un trou alésé est formé sur au moins un moule inférieur et le moule supérieur du moule de moulage pour mouler le composant optique en verre, de sorte que l'air comprimé par la paraison de verre fondu soit rejeté de l'espace principal qui a la forme correspondant à la forme du composant optique en verre pendant un processus de pressage.

7. Le moule pour mouler le composant optique en verre selon la revendication 6, où Un diamètre intérieur du trou alésé est de 0,1 mm ou plus et de 0,5 mm ou moins.

8. Une méthode de moulage d'un composant optique en verre ayant une forme tridimensionnelle précise et compliquée, utilisant le moule pour mouler le composant optique en verre selon l'une quelconque des revendications 1 à 7, la méthode comportant :
(1) Un processus consistant à introduire la paraison de verre fondu dans une partie centrale de la surface concave du moule femelle sur laquelle le moule inférieur du moule de moulage pour mouler le composant optique en verre est prévu au niveau de la partie périphérique extérieure ;
(2) Un processus consistant à abaisser le moule en anneau pour l'amener en contact étroit avec le moule femelle, de sorte que le moule supérieur du moule de moulage formé sur une surface inférieure du moule en anneau soit en contact étroit avec le moule inférieur du moule de moulage formé sur la partie périphérique extérieure du moule femelle pour former un espace principal dans le moule de moulage, l'espace principal ayant la forme correspondant à la forme du composant optique en verre ;
(3) Un processus consistant à presser la paraison de verre fondu introduite dans la partie centrale de la surface concave du moule femelle par le haut, par le moule mâle ayant la surface convexe ;
(4) Un processus de re-pressage de la paraison de verre fondu par le moule mâle, de sorte que la paraison de verre fondu s'écoule vers le haut le long d'une surface inférieure de la surface concave du moule femelle et que la paraison de verre fondu soit injectée dans l'espace formé dans le moule de moulage via une entrée de la paraison de verre fondu ;
(5) Un processus consistant à tirer le moule mâle, puis le moule en anneau vers le haut après que la température de la paraison de verre fondu injectée dans le moule de moulage soit devenue égale ou inférieure à un point de recuit du verre fondu et que le verre fondu se soit solidifié, et
(6) Un processus consistant à retirer le corps moulé en verre solidifié formé dans l'espace du moule femelle, du moule mâle, du moule en anneau et du moule de moulage, puis à couper le composant optique en verre moulé formé dans le moule de moulage.

9. La méthode de moulage d'un composant optique en verre ayant une forme tridimensionnelle précise et compliquée selon la revendication 8, où
Le poids de la paraison de verre fondu introduite dans la surface concave du moule femelle est 6 à 70 fois supérieur au poids du composant optique en verre formé dans le moule de moulage.

10. La méthode de moulage d'un composant optique en verre ayant une forme tridimensionnelle précise et compliquée selon la revendication 8, où
Le poids de la paraison de verre fondu introduite dans la surface concave du moule femelle est 8 à 70 fois supérieur au poids du composant optique en verre formé dans le moule de moulage.
